# EUROPEAN PATENT APPLICATION

(11) **EP 4 063 445 A1**
(43) Date of publication of application: **28.09.2022**
(21) Application number: 20889712.4
(22) Date of filing: 12.11.2020
(51) Int. Cl.: C08K 5/01, C08K 5/02, C08L 23/10, C08L 53/02, C08L 83/04

(54) **THERMOPLASTIC ELASTOMER COMPOSITION, AND MOLDED BODY THEREOF**

(30) Priority: 19.11.2019 JP 2019208921
(71) Applicant: MCPP Innovation LLC, Tokyo 100-8251 (JP)
(72) Inventor: OMORI, Masatoshi, Tokyo 100-8251 (JP); SANO, Mayu, Tokyo 100-8251 (JP)
(74) Representative: Vossius & Partner Patentanwälte Rechtsanwälte mbB
(86) International application number: PCT/JP2020/042257
(87) International publication number: WO 2021/100603

(57) **Abstract**

Provided are a thermoplastic elastomer composition having excellent injection moldability, feel, scratch resistance, and flame retardancy and a molded article thereof. The thermoplastic elastomer composition contains components (A) to (D), listed below, wherein a content ratio of the component (D) is 0.01 to 30 parts by mass per 100 parts by mass of a total of the components (A) to (D). The molded article is formed by molding the thermoplastic elastomer composition. Component (A): a propylene-based polymer; component (B): a block copolymer and/or a hydrogenated product thereof, the block copolymer including at least two polymer blocks P and at least one polymer block Q, the at least two polymer blocks P primarily including aromatic vinyl compound units, the at least one polymer block Q primarily including conjugated diene compound units; component (C): a softening agent for a hydrocarbon-based rubber; and component (D): a halogen-containing flame retardant.

## Description

### Technical Field

The present invention relates to a thermoplastic elastomer composition and molded articles thereof. More specifically, the present invention relates to a thermoplastic elastomer composition having excellent injection moldability, feel, scratch resistance, and flame retardancy and to molded articles made from the thermoplastic elastomer composition.

### Background Art

Thermoplastic elastomers soften and have flowability when heated and have rubber elasticity when cooled. Thermoplastic elastomers have molding processability similar to that of thermoplastic resins, have a unique rubber elasticity, and can be recycled. For these reasons, thermoplastic elastomers are widely used, and examples of the uses include those in automotive parts, building components, medical components, wire cover materials, and sundries.

Patent Literature 1 discloses a thermoplastic elastomer composition for injection molding, which is a so-called styrenic elastomer. The thermoplastic elastomer composition includes a block copolymer and a hydrogenated block copolymer obtained by hydrogenating the block copolymer, the block copolymer being formed of at least one polymer block A and at least one polymer block B, the polymer block A primarily including an aromatic vinyl compound, the polymer block B primarily including a conjugated diene compound. The thermoplastic elastomer composition further includes a propylene-based block copolymer. Patent Literature 1 states that the styrenic elastomer can be used in an automotive interior component.

Styrenic elastomers are also actively used in insulated wires, cables, and cords that are used within electric or electronic devices and as an external wiring thereof and also in optical fibers and optical fiber cords. In this instance, it is known that for the purpose of improving heat dissipation and flame retardancy of electric or electronic devices, which are heat generating elements, a halogen-free flame retardant is preferably used in view of the environmental impact.

For example, Patent Literature 2 to 4 discloses that thermoplastic elastomers in which magnesium hydroxide is used as a halogen-free flame retardant are employed as thermoplastic elastomers for electric or electronic devices, such as insulated wires, cables, and cords.

PTL 1: JP 2006-83323 A
PTL 2: JP 2012-107212 A
PTL 3: JP 2013-072033 A
PTL 4: JP 2013-072034 A

In recent years, regarding automotive interior spaces, demand for an increased high-quality feel and for comfort associated with a living space has been increasing. Accordingly, it is required that automotive interior components, in particular, skins of automotive interior components such as, typically, armrests, console pads, and the like, have a good appearance, feel, and scratch resistance.

Recently, such skins have been made to be thinner as molding operations have become easier, and interior finishing processes have been further simplified.

In instances where the skin of an automotive interior component is thinned, its flame retardancy is reduced, and, therefore, it is necessary to compensate for the reduction in flame retardancy resulting from thinning, by including a flame retardant.

However, flame retardants such as magnesium hydroxide as disclosed in Patent Literature 2 to 4 are not sufficient to overcome the reduction in flame retardancy resulting from thinning, in the uses mentioned above. If an attempt is made to improve flame retardancy by including a large amount of a flame retardant, the feel and scratch resistance are degraded, and in addition, moldability and appearance are impaired.

### Summary of Invention

Objects of the present invention are to provide a thermoplastic elastomer composition that exhibits excellent injection moldability and a good feel and scratch resistance while having excellent flame retardancy and to provide molded articles made from the thermoplastic elastomer composition.

The present inventor discovered that by including a halogen-containing flame retardant in a thermoplastic elastomer composition that includes a propylene-based polymer, a styrenic (hydrogenated) block copolymer, and a softening agent for a hydrocarbon-based rubber, it is possible to obtain a molded article having high flame retardancy with a good feel, injection moldability, and scratch resistance being maintained, the molded article being, therefore, ideal for a skin of an automotive interior component, and the like. Accordingly, the present invention was completed.

Specifically, a summary of the present invention lies in the following [1] to [10].

[1] A thermoplastic elastomer composition comprising components (A) to (D), listed below, wherein a content ratio of the component (D) is 0.01 to 30 parts by mass per 100 parts by mass of a total of the components (A) to (D),
   component (A): a propylene-based polymer;
   component (B): a block copolymer and/or a hydrogenated product thereof, the block copolymer including at least two polymer blocks P and at least one polymer block Q, the at least two polymer blocks P primarily including aromatic vinyl compound units, the at least one polymer block Q primarily including conjugated diene compound units;
   component (C): a softening agent for a hydrocarbon-based rubber; and
   component (D): a halogen-containing flame retardant.
[2] The thermoplastic elastomer composition according to [1], further comprising silicone.
[3] The thermoplastic elastomer composition according to [1] or [2], wherein halogen atoms in the halogen-containing flame retardant that serves as the component (D) are of at least one type selected from the group consisting of fluorine atoms, chlorine atoms, and bromine atoms.
[4] The thermoplastic elastomer composition according to any one of [1] to [3], wherein the content ratio of the component (D) per 100 parts by mass of the total of the component (A), the component (B), the component (C), and the component (D) is 0.9 to 30 parts by mass.
[5] The thermoplastic elastomer composition according to [4], wherein the component (A) is present in an amount of 1 to 80 parts by mass, the component (B) is present in an amount of 5 to 80 parts by mass, the component (C) is present in an amount of 5 to 80 parts by mass, and the component (D) is present in an amount of 0.9 to 30 parts by mass, per 100 parts by mass of the total of the components (A) to (D).
[6] The thermoplastic elastomer composition according to any one of [1] to [5], wherein a content percentage of halogen atoms present in the halogen-containing flame retardant that serves as the component (D) is 70 to 95 mass %.
[7] A molded article formed by molding the thermoplastic elastomer composition according to any one of [1] to [6].
[8] An injection-molded article formed by injection-molding the thermoplastic elastomer composition according to any one of [1] to [6].
[9] An automotive part in which the thermoplastic elastomer composition according to any one of [1] to [6] is used.
[10] An automotive part in which a thermoplastic elastomer composition comprising components (A) to (D), listed below, is used,
   component (A): a propylene-based polymer;
   component (B): a block copolymer and/or a hydrogenated product thereof, the block copolymer including at least two polymer blocks P and at least one polymer block Q, the at least two polymer blocks P primarily including aromatic vinyl compound units, the at least one polymer block Q primarily including conjugated diene compound units;
   component (C): a softening agent for a hydrocarbon-based rubber; and
   component (D): a halogen-containing flame retardant.

### Advantageous Effects of Invention

The present invention provides a thermoplastic elastomer composition having excellent injection moldability, feel, scratch resistance, and flame retardancy and provides molded articles made from the thermoplastic elastomer composition.

### Description of Embodiments

Embodiments of the present invention will be described in detail below. The present invention is not limited to the following description and can be modified and practiced in any manner that is consistent with the scope of the present invention.

In this specification, when numerical values or physical property values are expressed by using "to" with preceding and following numbers, it is to be understood that the preceding and following numbers are included.

### [Thermoplastic Elastomer Composition]

The thermoplastic elastomer composition of the present invention comprises components (A) to (D), listed below, in a specific content ratio:
component (A): a propylene-based polymer;
component (B): a block copolymer and/or a hydrogenated product thereof, the block copolymer including at least two polymer blocks P and at least one polymer block Q, the at least two polymer blocks P primarily including aromatic vinyl compound units, the at least one polymer block Q primarily including conjugated diene compound units;
component (C): a softening agent for a hydrocarbon-based rubber; and
component (D): a halogen-containing flame retardant.

### <Mechanism>

The thermoplastic elastomer composition of the present invention has excellent injection moldability and a good feel and scratch resistance while having excellent flame retardancy. A reason for this effect is assumed to be as follows.

The excellent injection moldability, the good feel, and the excellent scratch resistance are attributable to the component (A), which is a propylene-based polymer; the component (B), which is a block copolymer and/or a hydrogenated product thereof, the block copolymer including at least two polymer blocks P and at least one polymer block Q, the at least two polymer blocks P primarily including aromatic vinyl compound units, the at least one polymer block Q primarily including conjugated diene compound units; and the component (C), which is a softening agent for a hydrocarbon-based rubber.

The improvement in flame retardancy, which is achieved while maintaining the injection moldability and the good feel and scratch resistance, is attributable to the component (D), which is a halogen-containing flame retardant included as a flame retardant.

### <Component (A)>

In the propylene-based polymer that serves as the component (A) (which may be hereinafter referred to as a "propylene-based polymer (A)") used in the present invention, it is sufficient that propylene units, as a major component, be present in an amount greater than or equal to 50 mass% in the monomer units that form the propylene-based polymer (A). From the standpoint of heat resistance, rigidity, crystallinity, chemical resistance, and the like, it is preferable that the content percentage of propylene units in the propylene-based polymer (A) be greater than or equal to 60 mass%. The content percentage is more preferably greater than or equal to 75 mass% and even more preferably greater than or equal to 90 mass%. The upper limit of the content percentage of propylene units in the propylene-based polymer (A) is not particularly limited and may be 100 mass%.

The content of the propylene units in the component (A) and the content of each of the structural units of the other copolymer components, which will be described below, can be determined by using infrared spectroscopy.

The type of the propylene-based polymer (A) is not particularly limited. Specifically, the propylene-based polymer (A) may be a propylene homopolymer, a propylene-ethylene random copolymer, a propylene-ethylene block copolymer, or the like, and any of these may be used.

A melt flow rate (JIS K7210, 230°C, a load of 21.2 N) of the propylene-based polymer (A) is not particularly specified and is typically 0.05 to 200 g/10 minutes. The melt flow rate is preferably 0.05 to 100 g/10 minutes and more preferably 0.1 to 80 g/10 minutes. When the melt flow rate is greater than or equal to the lower limit, good moldability is achieved, and, therefore, a resulting molded article has a good appearance. When the melt flow rate is less than or equal to the upper limit, mechanical properties, particularly, a tensile strength at break, tends to be good.

Regarding a catalyst that is used in the production of the propylene-based polymer (A), non-limiting preferred examples of the catalyst include stereoregular catalysts. Examples of the stereoregular catalysts include, but are not limited to, Ziegler catalysts and metallocene catalysts.

Among these catalysts, metallocene catalysts are preferable.

Examples of the Ziegler catalysts include, but are not limited to, two-component catalysts and three-component catalysts. The two-component catalysts may be ones that include a transition metal component and an organometallic component, the transition metal component may be, for example, a titanium halide compound, such as titanium trichloride, titanium tetrachloride, or trichloroethoxytitanium, or a contact product of the titanium halide compound and a magnesium compound, which may typically be magnesium halide, and the organometallic component may be, for example, an alkylaluminium compound, a halide thereof, a hydride thereof, or an alkoxide thereof. The three-component catalysts may be ones that include, in addition to any of the foregoing components, an electron-donating compound containing nitrogen, carbon, phosphorus, sulfur, oxygen, silicon, or the like.

Examples of the metallocene catalysts include, but are not limited to, catalysts made of a Group 4 transition metal compound and a co-catalyst, with an optional component being an organoaluminium compound. The Group 4 transition metal compound may be one containing a ligand having a cyclopentadienyl skeleton (a so-called metallocene compound). The co-catalyst may be one that can react with the metallocene compound to be activated to a stable ionized state. Any of known metallocene catalysts may be used. The metallocene compound is preferably a crosslinkable metallocene compound that enables stereoregular polymerization of propylene and more preferably a crosslinkable metallocene compound that enables stereoregular isotactic polymerization of propylene.

A method for producing the propylene-based polymer (A) may be performed in the presence of the catalyst described above, and examples of the method include slurry methods that use an inert solvent, solution methods, vapor phase methods that substantially do not use a solvent, and bulk polymerization methods that use a polymerization monomer as a solvent. For example, in the case of a slurry polymerization method, the polymerization may be carried out in an inert hydrocarbon or a liquid monomer. Examples of the inert hydrocarbon include n-butane, isobutane, n-pentane, isopentane, hexane, heptane, octane, cyclohexane, benzene, toluene, and xylene. A polymerization temperature is typically -80 to 150°C and preferably 40 to 120°C. Preferably, a polymerization pressure is 1 to 60 atm. A molecular weight of the resulting propylene-based polymer (A) can be adjusted by using hydrogen or a different known molecular weight regulator. The polymerization is performed by using a continuous or batch reaction, and the conditions for the polymerization may be conditions that are typically used. The polymerization reaction may be a single-stage reaction or a multi-stage reaction.

The propylene-based polymer (A) may be a commercially available product. Examples of the commercially available product of the propylene-based polymer (A) include a polypropylene block copolymer manufactured by SunAllomer Ltd. and Novatec (registered trademark) PP and WAYMAX (registered trademark), manufactured by Japan Polypropylene Corporation.

One propylene-based polymer (A) may be used alone, a propylene-based polymer (A) having a copolymer composition may be used, or a mixture of two or more propylene-based polymers (A) having different physical properties and the like may be used.

### <Component (B)>

The component (B) used in the present invention is a block copolymer and/or a hydrogenated product thereof (which may hereinafter be referred to as a "(hydrogenated) block copolymer", the block copolymer including at least two polymer blocks P (which may hereinafter be referred to simply as "blocks P") and at least one polymer block Q (which may hereinafter be referred to simply as a "block Q"), the at least two polymer blocks P primarily including aromatic vinyl compound units, the at least one polymer block Q primarily including conjugated diene compound units.

As used herein, the expression "primarily including" means that a polymer block of interest includes monomer units of interest in an amount of 50 mole % or greater.

The aromatic vinyl compound that forms the blocks P are not particularly limited. Examples of the aromatic vinyl compound include styrene, α-methylstyrene, p-methylstyrene, divinylbenzene, 1,1-diphenylethylene, N,N-dimethyl-p-aminoethylstyrene, and N,N-diethyl-p-aminoethylstyrene. Among these, styrene, α-methylstyrene, and p-methylstyrene are preferable from the standpoint of availability and productivity. Styrene is particularly preferable.

The blocks P may be formed of one type of aromatic vinyl compound unit or formed of two or more types of aromatic vinyl compound units. The blocks P may include monomer units other than vinyl aromatic compound units.

The conjugated diene compound that forms the block Q is a diolefin having a pair of conjugated double bonds. Examples of the conjugated diene compound include, but are not limited to, 1,3-butadiene, 2-methyl-1,3-butadiene (isoprene), 2,3-dimethyl-1,3-butadiene, 1,3-pentadiene, 2-methyl-1,3-pentadiene, and 1,3-hexadiene. Among these, 1,3-butadiene and isoprene are preferable from the standpoint of availability and productivity. 1,3-butadiene is particularly preferable.

The block Q may be formed of one type of conjugated diene compound unit or formed of two or more types of conjugated diene compound units. The block Q may include monomer units other than conjugated diene compound units.

In the (hydrogenated) block copolymer that serves as the component (B), it is preferable that the aromatic vinyl compound units be styrene units, and the conjugated diene compound units be butadiene units.

The block polymer having at least two blocks P and at least one block Q may be linear, branched, radial, and/or the like. It is preferable that the block copolymer be a block copolymer represented by formula (1) or (2) below.

P-(Q-P)m (1)

(P-Q)n (2)

In the formulae, P represents the block P, Q represents the block Q, m represents an integer of 1 to 5, and n represents an integer of 2 to 5.

In instances where a plurality of blocks P and a plurality of blocks Q are present, the compound units in the plurality of blocks may be the same as or different from one another.

In formulae (1) and (2), m and n may be large numbers, which is suitable in terms of lowering an order-disorder transition temperature of a rubbery high polymer, or m and n may be small numbers, which is suitable in terms of ease of production and the cost of production.

From the standpoint of the rubber elasticity of the composition, it is preferable that the component (B) be a block copolymer represented by formula (1). The component (B) is more preferably a block copolymer represented by formula (1) in which m is 3 or less, even more preferably a block copolymer represented by formula (1) in which m is 2 or less, and most preferably a block copolymer represented by formula (1) in which m is 1.

The component (B) may be a hydrogenated product of the block copolymer including the blocks P and the block Q. In this instance, it is preferable that the component (B) be a hydrogenated product of a block copolymer represented by formula (1); the component (B) is more preferably a hydrogenated product of a block copolymer represented by formula (1) in which m is 3 or less, even more preferably a hydrogenated product of a block copolymer represented by formula (1) in which m is 2 or less, and most preferably a hydrogenated product of a block copolymer represented by formula (1) in which m is 1.

In the block copolymer that serves as the component (B), a proportion of the blocks P may be large, which is preferable in terms of the mechanical strength of the thermoplastic elastomer composition, or the proportion may be small, which is preferable in terms of the flexibility thereof and a reduced likelihood of bleeding thereof. Specifically, a content percentage of the blocks P in the block copolymer that serves as the component (B) is preferably greater than or equal to 5 mass%, more preferably greater than or equal to 10 mass%, even more preferably greater than or equal to 15 mass%, and particularly preferably greater than or equal to 20 mass%. Furthermore, the content percentage of the blocks P in the block copolymer that serves as the component (B) is preferably less than or equal to 70 mass%, more preferably less than or equal to 60 mass%, even more preferably less than or equal to 50 mass%, and particularly preferably less than or equal to 40 mass%. As the proportion of the blocks P increases, the mechanical strength tends to be high, and as the proportion decreases, flexibility tends to be high, and the likelihood of bleeding tends to decrease.

In the block copolymer that serves as the component (B), a proportion of the block Q may be large, which is preferable in terms of the flexibility of the thermoplastic elastomer composition and a reduced likelihood of bleeding thereof, or the proportion may be small, which is preferable in terms of the mechanical strength thereof. Specifically, a content percentage of the block Q in the block copolymer that serves as the component (B) is preferably greater than or equal to 30 mass%, more preferably greater than or equal to 40 mass%, even more preferably greater than or equal to 50 mass%, and particularly preferably greater than or equal to 60 mass%. Furthermore, the content percentage of the block Q in the block copolymer that serves as the component (B) is preferably less than or equal to 95 mass%, more preferably less than or equal to 90 mass%, even more preferably less than or equal to 85 mass%, and particularly preferably less than or equal to 80 mass%. As the proportion of the block Q increases, the flexibility tends to be high, and the likelihood of bleeding tends to decrease, and as the proportion decreases, the mechanical strength tends to be high.

A weight average molecular weight (Mw) of the (hydrogenated) block copolymer that serves as the component (B) may be large, which is preferable in terms of heat resistance and mechanical strength, or the weight average molecular weight (Mw) may be small, which is preferable in terms of molding appearance, flowability, and moldability. The weight average molecular weight (Mw) of the (hydrogenated) block copolymer that serves as the component (B) is preferably greater than or equal to 10,000 and more preferably greater than or equal to 30,000 and is preferably less than or equal to 800,000, more preferably less than or equal to 650,000, and even more preferably less than or equal to 500,000.

The weight average molecular weight (Mw) is a weight average molecular weight measured by gel permeation chromatography (which may be hereinafter abbreviated as "GPC") under the following conditions and calculated with polystyrene standards.

### (Measurement Conditions)

Instrument: 150C ALC/GPC, manufactured by Nihon Millipore K.K.
Column: AD80M/S, manufactured by Showa Denko K.K. (3 columns)
Detector: MIRANIA, an infrared spectrophotometer manufactured by Foxboro Company, measurement
Wavelength: 3.42 µm
Solvent: o-dichlorobenzene
Temperature: 140°C
Flow rate: 1 cm³/minute
Injection volume: 200 microliters
Concentration: 2 mg/cm³
0.2 mass% 2,6-di-tert-butyl-p-phenol is added as an antioxidant.

Preferred examples of the component (B) include styrene-butadiene-styrene block copolymers and hydrogenated products thereof; styrene-isoprene-styrene block copolymers and hydrogenated products thereof; and styrene-isoprene-butadiene-styrene block copolymers and hydrogenated products thereof.

The component (B) may be a commercially available product. Specific examples of a commercially available product for the component (C) include Kraton (registered trademark) G, manufactured by Kraton Corporation, Septon (registered trademark), manufactured by Kuraray Co., Ltd., Tuftec (registered trademark) and S.O.E. (registered trademark), manufactured by Asahi Kasei Corp., and Taipol (registered trademark), manufactured by TSRC Corporation.

For the component (B), one (hydrogenated) block copolymer may be used alone, or a mixture of two or more (hydrogenated) block copolymers may be used.

### <Component (C)>

The softening agent for a hydrocarbon-based rubber that serves as the component (C) used in the present invention is effective for improving the flexibility and flowability of the thermoplastic elastomer composition of the present invention.

The softening agent for a hydrocarbon-based rubber may be a mineral-oil-based softening agent or a synthetic-resin-based softening agent; these agents have a high affinity for the component (B) and are, therefore, preferable. A mineral-oil-based softening agent is more preferable.

Typically, mineral-oil-based softening agents are mixtures of an aromatic hydrocarbon, a naphthenic hydrocarbon, and a paraffinic hydrocarbon. Oils in which 50% or more of all the carbon atoms are carbon atoms derived from a paraffinic hydrocarbon are referred to as paraffinic oils. Oils in which approximately 30 to 45% of all the carbon atoms are carbon atoms derived from a naphthenic hydrocarbon are referred to as naphthenic oils. Oils in which 35% or more of all the carbon atoms are carbon atoms derived from an aromatic hydrocarbon are referred to as aromatic oils.

The softening agent for a hydrocarbon-based rubber used as the component (C) may be one of the softening agents mentioned above or a mixture of two or more of the softening agents. Among these, paraffinic oils are preferable because paraffinic oils have a good hue.

Examples of the synthetic-resin-based softening agent include polybutene and low-molecular-weight polybutadiene.

A kinematic viscosity at 40°C of the softening agent for a hydrocarbon-based rubber may be low, which is preferable in terms of improving the flowability of the thermoplastic elastomer composition of the present invention, or the kinematic viscosity may be high, which is preferable in terms of a reduced likelihood of fogging and the like. The kinematic viscosity at 40°C of the softening agent for a hydrocarbon-based rubber is preferably greater than or equal to 20 centistokes (cSt) and more preferably greater than or equal to 50 centistokes and is preferably less than or equal to 800 centistokes and more preferably less than or equal to 600 centistokes.

A flash point (COC method) of the softening agent for a hydrocarbon-based rubber is preferably greater than or equal to 200°C and more preferably greater than or equal to 250°C.

A pour point of the softening agent for a hydrocarbon-based rubber is preferably 20°C or less and -10°C or greater.

An aniline point of the softening agent for a hydrocarbon-based rubber is preferably 110°C or greater and 150°C or less.

### <Component (D)>

The halogen-containing flame retardant that serves as the component (D) used in the present invention is effective for improving the flame retardancy of the thermoplastic elastomer composition of the present invention while maintaining the feel and scratch resistance thereof.

It is preferable that the halogen atoms present in the halogen-containing flame retardant that serves as the component (D) be fluorine atoms, chlorine atoms, or bromine atoms. It is more preferable that the halogen atoms be bromine atoms because, in this case, an excellent effect for imparting and improving flame retardancy can be produced even with a small amount of addition.

It is preferable that a content percentage of the halogen atoms present in the component (D), in terms of a concentration of halogen atoms, be greater than or equal to 10 mass%. The content percentage is more preferably greater than or equal to 20 mass%, even more preferably greater than or equal to 30 mass%, and particularly preferably greater than or equal to 70 mass%. The upper limit of the content percentage is preferably less than or equal to 95 mass% and more preferably less than or equal to 90 mass%. As the content percentage of halogen atoms increases, flame retardancy tends to be high, and as the content percentage decreases, contamination of a mold and environmental impact tend to be reduced.

Examples of the halogen-containing flame retardant that serves as the component (D) include hexabromocyclododecane, bis(dibromopropyl) tetrabromobisphenol A, bis(dibromopropyl) tetrabromobisphenol S, tris(dibromopropyl) isocyanurate, tris(tribromoneopentyl) phosphate, decabromodiphenylene oxide, brominated epoxy resins, 1,2-bis(2,3,4,5,6-pentabromophenyl)ethane, tris(tribromophenoxy) triazine, ethylene bis(tetrabromophthal) imide, polybromophenyl indane, brominated polystyrene, tetrabromobisphenol A polycarbonate, brominated polyphenylene oxide, and poly(pentabromobenzyl acrylate). 1,2-bis(2,3,4,5,6-pentabromophenyl)ethane is preferable.

As the halogen-containing flame retardant that serves as the component (D), one halogen-containing flame retardant may be used alone, or a mixture of two or more halogen-containing flame retardants may be used.

In the thermoplastic elastomer composition of the present invention, one or more other flame retardants, different from halogen-containing flame retardants, may be used, but it is preferable that other flame retardants be substantially absent. The expression "substantially absent" means that the flame retardant is not added in an amount at which the function of the flame retardant can be exhibited and typically refers to an amount of 0.1 mass% or less relative to an amount of a resin component. The "other flame retardants different from halogen-containing flame retardants" are flame retardants free of halogens, examples of which include phosphorus-containing flame retardants, such as phosphoric acid esters, polyphosphate salts, and red phosphorus; inorganic flame retardants, such as aluminum hydroxide and magnesium hydroxide; silicone-containing flame retardants; and triazine-containing flame retardants.

As used herein, the "resin component" refers to a total of the component (A), the component (B), and other optionally used resins and elastomers, which will be described later.

### <Mixing Ratio>

In the thermoplastic elastomer composition of the present invention, a content ratio of the component (D) is 0.01 to 30 parts by mass per 100 parts by mass of a total of the component (A), the component (B), the component (C), and the component (D). From the standpoint of a good feel and scratch resistance, it is preferable that the upper limit of the content ratio be less than or equal to 20 parts by mass. The content ratio is more preferably less than or equal to 15 parts by mass and even more preferably less than or equal to 12 parts by mass. From the standpoint of achieving a required flame retardancy, it is preferable that the lower limit of the content ratio be greater than or equal to 0.5 parts by mass. The content ratio is more preferably greater than or equal to 0.9 parts by mass and even more preferably greater than or equal to 1 part by mass.

Regarding content ratios of the component (A), the component (B), the component (C), and the component (D) in the thermoplastic elastomer composition of the present invention, it is preferable that the component (A) be present in an amount of 1 to 80 parts by mass, the component (B) in an amount of 5 to 80 parts by mass, the component (C) in an amount of 5 to 80 parts by mass, and the component (D) in an amount of 0.9 to 30 parts by mass, per 100 parts by mass of the total of the components. Regarding the content ratios, more preferably, the component (A) is present in an amount of 5 to 70 parts by mass, the component (B) in an amount of 10 to 70 parts by mass, the component (C) in an amount of 10 to 70 parts by mass, and the component (D) in an amount of 1.0 to 20 parts by mass; even more preferably, the component (A) is present in an amount of 5 to 60 parts by mass, the component (B) in an amount of 10 to 65 parts by mass, the component (C) in an amount of 10 to 65 parts by mass, and the component (D) in an amount of 1.0 to 15 parts by mass; and particularly preferably, the component (A) is present in an amount of 10 to 55 parts by mass, the component (B) in an amount of 15 to 55 parts by mass, the component (C) in an amount of 15 to 55 parts by mass, and the component (D) in an amount of 1.0 to 12 parts by mass.

It is preferable that a mass ratio between the component (A) and the component (B) in the thermoplastic elastomer composition of the present invention, denoted as [mass of component (A)]:[mass of component (B)], be within a range of 5:95 to 90:10. The mass ratio is more preferably within a range of 10:90 to 80:20 and even more preferably within a range of 10:90 to 70:30.

Furthermore, it is preferable that a mass ratio between the component (B) and the component (C) in the thermoplastic elastomer composition of the present invention, denoted as [mass of component (B)]:[mass of component (C)], be within a range of 20:80 to 80:20. The mass ratio is more preferably within a range of 25:75 to 75:25 and even more preferably within a range of 25:75 to 65:35.

In instances where the thermoplastic elastomer composition of the present invention includes the propylene-based polymer that serves as the component (A) in an amount within any of the above-mentioned ranges, the effects of the component (A) of improving heat resistance, injection moldability, and mechanical properties are sufficiently produced while the effects due to inclusion of the other components are sufficiently produced.

In instances where the thermoplastic elastomer composition of the present invention includes the (hydrogenated) block copolymer that serves as the component (B) in an amount within any of the above-mentioned ranges, the effects of the component (B) for heat resistance, oil resistance, and inhibition of bleeding of the softening agent for a hydrocarbon-based rubber that serves as the component (C) are sufficiently produced while the effects due to inclusion of the other components are sufficiently produced.

In instances where the thermoplastic elastomer composition of the present invention includes the softening agent for a hydrocarbon-based rubber that serves as the component (C) in an amount within any of the above-mentioned ranges, the effects of the component (C) of improving flexibility and flowability are sufficiently produced while the effects due to inclusion of the other components are sufficiently produced.

In instances where the thermoplastic elastomer composition of the present invention includes the halogen-containing flame retardant that serves as the component (D) in an amount within any of the above-mentioned ranges, the effect of improving flame retardancy is sufficiently produced while the effects due to inclusion of the other components are sufficiently maintained.

### <Other Components>

In the thermoplastic elastomer composition of the present invention, components other than the components (A) to (D) (which may be referred to simply as "other components" in this specification) may be included as necessary provided that objects of the present invention are not impaired. Examples of the other components include resins and elastomers other than the components (A) and (B) (which may be collectively referred to simply as "other resins" in this specification) and various additives.

It is preferable that a content ratio of the other components, per 100 parts by mass of the total of the components (A) to (D), be less than or equal to 900 parts by mass. The content ratio is more preferably less than or equal to 570 parts by mass, even more preferably less than or equal to 400 parts by mass, and particularly preferably less than or equal to 300 parts by mass.

Examples of the other resins that may be included in the thermoplastic elastomer composition of the present invention include resins, such as polyolefin resins (excluding resins corresponding to the component (A)), polyester resins, polyamide resins, styrene resins (excluding resins corresponding to the component (B)), acrylic resins, polycarbonate resins, and polyvinyl chloride resins; olefin-based elastomers, such as ethylene-propylene copolymer rubbers (EPM), ethylene-propylene-non-conjugated diene copolymer rubbers (EPDM), ethylene-butene copolymer rubbers (EBM), and ethylene-propylene-butene copolymer rubbers; polyamide-based elastomers, such as polyamide-polyol copolymers; polyvinyl chloride-based elastomers; polybutadiene-based elastomers; hydrogenated products of any of the foregoing, products obtained by modifying any of the foregoing with an acid anhydride or the like so that a polar functional group is incorporated therein; and products obtained by graft-, random- and/or block-copolymerizing any of the foregoing with another monomer. One of these other resins may be included, or two or more of them may be included.

Examples of the additives that may be included in the thermoplastic elastomer composition of the present invention include antioxidants, crystal nucleating agents, processing aids, such as lubricants, UV absorbers, light stabilizers, such as hindered amine-based compounds, hydrolysis resistant agents, coloring agents, such as pigments and dyes, antistatic agents, conductive agents, reinforcing agents, fillers, plasticizing agents, mold release agents, and foaming agents.

Including silicone, as a lubricant, in the thermoplastic elastomer composition of the present invention is effective. Silicone is a component that imparts wear resistance to the thermoplastic elastomer composition and prevents the characteristic stickiness of elastomers.

The type of a substituent attached to the siloxane backbone in the molecular structure of the silicone is not particularly limited. Preferred silicones are dimethyl silicones (dimethylpolysiloxanes), methyl phenyl silicones, and alkyl-modified silicones.

A kinematic viscosity (25°C) of the silicone is typically greater than or equal to 1 centistoke. The kinematic viscosity is preferably greater than or equal to 5 centistokes and more preferably greater than or equal to 10 centistokes, and the upper limit thereof is not particularly limited. As the kinematic viscosity of the silicone increases, an effect of improving wear resistance and scratch resistance increases, and as the kinematic viscosity decreases, an effect of improving stickiness increases.

In instances where the thermoplastic elastomer composition of the present invention includes a lubricant, such as silicone oil, a content of the lubricant is preferably 0.1 to 15 parts by mass and more preferably 0.1 to 10 parts by mass, per 100 parts by mass of the total of the component (A), the component (B), the component (C), and the component (D). A content of the silicone of greater than or equal to 0.1 parts by mass is preferable from the standpoint of the effect of improving wear resistance, scratch resistance, and sticking resistance. A content of the silicone of less than or equal to 15 parts by mass is preferable from the standpoint of mechanical strength, flame retardancy, and the like.

Examples of antioxidants (heat stabilizers) that may be included in the thermoplastic elastomer composition of the present invention include hydroxylamine-based antioxidants, dithiocarbamic acid salt-based antioxidants, hindered phenolic antioxidants, sulfur-containing antioxidants, and phosphorus-containing antioxidants.

Preferably, the hydroxylamine-based antioxidants may be N,N-dialkyl hydroxylamines, examples of which include compounds represented by a general formula of R¹R²NOH (where R¹ and R² each independently represent an alkyl). In the formula, R¹ or R² is preferably a dodecyl group, a tetradecyl group, a hexadecyl group, an octadecyl group, or a heptadecyl group. Particularly preferred dialkyl hydroxylamines are N,N-dioctadecylhydroxylamine, N,N-dihexadecylhydroxylamine, and mixtures of these.

Preferably, the dithiocarbamic acid salt-based antioxidants may be metal salts of dialkyl dithiocarbamic acid, and among these, nickel dialkyl dithiocarbamate is preferable. In particular, nickel dibutyl dithiocarbamate has a significant effect of improving heat aging resistance and is, therefore, preferable.

The hindered phenolic antioxidants may be those known in the art, and in particular, hindered phenolic antioxidants having a molecular weight of greater than or equal to 500, such as tetrakis[methylene-3-(3,5-di-t-butyl-4-hydroxyphenyl) propionate]methane, are preferable. Examples of commercially available products include Irganox (registered trademark) 1010, manufactured by BASF.

The sulfur-containing antioxidants are compounds containing sulfur. Examples of the compounds include thioether-based compounds, dithioic acid salt-based compounds, mercaptobenzimidazole-based compounds, thiocarbanilide-based compounds, and thiodipropionate-based compounds. Note that the compounds exclude compounds corresponding to dithiocarbamic acid salt-based antioxidants, which are mentioned above. Among these, thiodipropionate-based compounds are particularly preferable.

The phosphorus-containing antioxidants are compounds containing phosphorus. Examples of the compounds include phosphoric acids, phosphorous acids, hypophosphorous acid derivatives, phenylphosphonic acids, polyphosphonates, dialkyl pentaerythritol diphosphites, and dialkyl bisphenol A diphosphites.

These antioxidants may be used alone or in a combination of two or more.

In instances where the thermoplastic elastomer composition of the present invention includes an antioxidant, a content of the antioxidant is preferably 0.01 to 5 parts by mass per 100 parts by mass of the total of the component (A), the component (B), the component (C), and the component (D). A content of the antioxidant of greater than or equal to 0.01 parts by mass is preferable from the standpoint of the effect of improving heat aging resistance. A content of the antioxidant of less than or equal to 5 parts by mass is preferable from the standpoint of a reduced likelihood of problems such as bleeding, the mechanical strength of the composition, and the like.

The hindered amine-based light stabilizers are compounds having a hindered piperidine structure and may be those known in the art. Examples of commercially available hindered amine-based light stabilizers include Tinuvin (registered trademark) series products, manufactured by BASF.

One hindered amine-based light stabilizer may be used alone, or a mixture of two or more hindered amine-based light stabilizers may be used.

In instances where the thermoplastic elastomer composition of the present invention includes a hindered amine-based light stabilizer, a content of the hindered amine-based light stabilizer is preferably 0.005 to 2 parts by mass and more preferably 0.01 to 0.5 parts by mass, per 100 parts by mass of the total of the component (A), the component (B), the component (C), and the component (D). When the content of the hindered amine-based light stabilizer is within any of the above-mentioned ranges, sufficient weatherability is exhibited, and the likelihood of bleeding onto a surface of a molded article is reduced. Accordingly, such a content is preferable.

It is preferable that a total content of the additives, such as the antioxidants mentioned above, in the thermoplastic elastomer composition of the present invention be less than or equal to 2 parts by mass per 100 parts by mass of the total of the component (A), the component (B), the component (C), and the component (D). More preferably, the total content is less than or equal to 1 part by mass.

### <Method for Producing Thermoplastic Elastomer Composition>

Methods for producing the thermoplastic elastomer composition of the present invention are not particularly limited. For example, the thermoplastic elastomer composition of the present invention can be produced in accordance with a commonly used method, by dry-blending together the component (A), the component (B), the component (C), the component (D), and other components that are optionally added and subsequently melt-kneading the blend.

In this instance, mixing apparatuses that may be used are not particularly limited, and examples thereof include kneading apparatuses, such as Banbury mixers, Labo Plastomills, single screw extruders, and twin screw extruders. In particular, in terms of productivity and good kneading properties, it is preferable that a melt-mixing method using an extruder be employed for the production.

A melting temperature for the kneading may be appropriately set. The melting temperature is typically within a range of 130 to 300°C and preferably within a range of 150 to 250°C.

### <Physical Properties of Thermoplastic Elastomer Composition>

It is preferable, from the standpoint of moldability, that the thermoplastic elastomer composition of the present invention have a melt flow rate (MFR), as measured by a method according to the specification of JIS K 7210 at a measurement temperature of 230°C and a measurement load of 21.2 N, of greater than or equal to 2 g/10 minutes. More preferably, the melt flow rate is greater than or equal to 5 g/10 minutes and even more preferably greater than or equal to 10 g/10 minutes. Furthermore, from the standpoint of moldability, it is preferable that the melt flow rate (MFR) of the thermoplastic elastomer composition of the present invention be less than or equal to 200 g/10 minutes. The melt flow rate is more preferably less than or equal to 185 g/10 minutes and even more preferably less than or equal to 160 g/10 minutes.

It is preferable, from the standpoint of flexibility, that the thermoplastic elastomer composition of the present invention have a tensile elongation, as measured by a procedure according to the measurement method of JIS K 6251, of greater than or equal to 200%. More preferably, the tensile elongation is greater than or equal to 300%. From the standpoint of flowability, it is preferable that the upper limit of the tensile elongation be less than or equal to 1500%. More preferably, the upper limit is less than or equal to 1200%.

### <Uses>

Uses of the thermoplastic elastomer composition of the present invention are not particularly limited. The thermoplastic elastomer composition is particularly useful as molding materials for automotive parts, building components, medical components, wire cover materials, sundries, and the like.

### [Molded Articles]

The thermoplastic elastomer composition of the present invention can be molded to be used as various molded articles. The molding of the thermoplastic elastomer composition of the present invention can be performed by using any of a variety of molding methods, such as common injection molding methods and extrusion molding methods.

Specific examples of molded articles of the present invention, which are formed by molding the thermoplastic elastomer composition of the present invention, include injection-molded articles and extrusion-molded articles.

Molding conditions for injection-molding the thermoplastic elastomer composition of the present invention are as follows.

A molding temperature is typically 160 to 250°C and preferably 170 to 220°C.

An injection pressure is typically 5 to 100 MPa and preferably 10 to 80 MPa.

A mold temperature is typically 10 to 80°C and preferably 20 to 60°C.

Injection-molded articles formed by injection-molding the thermoplastic elastomer composition of the present invention can be fusion-bonded to a hard, olefinic resin, such as a propylene resin, and used as composite molded articles.

Molded articles of the present invention are useful as automotive parts, building components, medical components, wire cover materials, sundries, and the like. Molded articles of the present invention have a good appearance, feel, and scratch resistance and excellent flame retardancy. Accordingly, the molded articles are useful as skins of automotive interior components such as, typically, armrests, console pads, and the like.

### EXAMPLES

Now, specific embodiments of the present invention will be described in further detail with reference to examples. The present invention is not limited to the following examples as long as the present invention is within the gist thereof.

The values of various production conditions and evaluation results in the following examples are to be understood as preferred upper or lower limit values of embodiments of the present invention, and preferred ranges may be a range defined by a combination of the upper or lower limit value and a value of an example described below or by a combination of values of examples described below.

In the following examples and comparative examples, the raw materials used in the preparation of the thermoplastic elastomer composition and the methods for evaluating the obtained thermoplastic elastomer composition are as follows.

### [Raw Materials Used]

### <Component (A)>

A-1: Novatec PP (registered trademark) BC06C, manufactured by Japan Polypropylene Corporation
Propylene-ethylene copolymer
Content percentage of polypropylene units: 91 mass%
MFR (JIS K 7210, 230°C, a load of 21.2 N): 60 g/10 minutes

### <Component (B)>

B-1: Taipol (registered trademark) 6159, manufactured by TSRC Corporation
Hydrogenated product of styrene-butadiene-styrene block copolymer
Weight average molecular weight: 400,000
Content percentage of styrene units: 30 mass%

B-2: Septon (registered trademark) 4077, manufactured by Kuraray Co., Ltd.
Hydrogenated product of styrene-isoprene-butadiene-styrene block copolymer
Weight average molecular weight: 380,000
Content percentage of styrene units: 30 mass%

B-3: S.O.E.-SS (registered trademark) S1605, manufactured by Asahi Kasei Corp.
Hydrogenated product of styrene-butadiene-styrene block copolymer
Weight average molecular weight: 200,000
Content percentage of styrene units: 60 mass%

### <Component (C)>

C-1: Diana Process Oil PW90, manufactured by Idemitsu Kosan Co., Ltd.
Paraffinic oil
Kinematic viscosity (40°C): 90 centistokes

### <Component (D)>

D-1: Saytex (registered trademark) 8010, manufactured by Albemarle Corporation
1,2-Bis(2,3,4,5,6-pentabromophenyl)ethane
Content percentage of bromine atoms: 82 mass%

### <Other flame retardants>

X-1: Kisuma (registered trademark) 5, manufactured by Kyowa Chemical Industry Co., Ltd.
Magnesium hydroxide (Mg(OH)₂)

X-2: ADK STAB (registered trademark) FP-2200, manufactured by ADEKA Corporation
Phosphorus-containing antioxidant

### <Other additives>

E-1: Irganox (registered trademark) 1010, manufactured by BASF
Hindered phenolic antioxidant

F-1: BY27-001, manufactured by Dow Corning Toray Co., Ltd.
Dimethyl silicone-containing masterbatch
Content percentage of dimethyl silicone: 50 mass%

### [Evaluations of Thermoplastic Elastomer Compositions]

### <Flame retardancy: burning velocity FMVSS No. 302>

A measurement of a burning velocity was performed on injection-molded articles (350 mm × 100 mm × 1.5 mm) prepared from pellets of thermoplastic elastomer compositions obtained in Examples and Comparative Examples. Specifically, an FMVSS No. 302 combustion tester was used, a 38-mm burner flame was applied to a right end of each of the injection-molded articles for 15 seconds, and the burning velocity was a velocity over a burning distance between gauge lines of 254 mm. Regarding the measurement jigs, wires were used for the measurement. An average of the measurements of five test runs was calculated.

Lower burning velocities indicate higher levels of flame retardancy. The burning velocity is preferably less than or equal to 40 mm/minute, more preferably less than or equal to 35 mm/minute, and even more preferably less than or equal to 30 mm/minute.

### <Feel>

Examination was performed on the injection-molded articles (350 mm × 100 mm × 1.5 mm) prepared from the pellets of the thermoplastic elastomer compositions obtained in Examples and Comparative Examples. Specifically, the feel of the injection-molded articles when touched by three fingers of a person in a stroking manner was examined, and evaluations were performed by using the following criteria.

Regarding the feel of the injection-molded articles, those that had no bleed on a surface and did not adhere to the hand are preferable, and those that had a dry feel are more preferable.
A: There was a dry feel, and no adhering matter was perceived by the hand.
B: There was a slightly dry feel, and no adhering matter was perceived by the hand.
C: There was a sticky feel, or there was a dry feel, but adhering matter was perceived by the hand.

### <Scratch resistance: Taber scratch>

Observation was performed on the injection-molded articles (350 mm × 100 mm × 1.5 mm) prepared from the pellets of the thermoplastic elastomer compositions obtained in Examples and Comparative Examples. Specifically, a Taber scratch tester from Toyo Seiki Seisaku-sho, Ltd. was used, a tungsten carbide cutter was attached to a jig in a forward direction, the specimens were rotated at a rotational speed of 0.5 rpm under a load of 350 g, the state of the specimens was then observed, and evaluations were performed by using the following criteria.

Regarding the scratch resistance of the injection-molded articles, most preferable is an instance in which no change was observed, or only surface chipping was observed, with no cracks or penetration.
A: No change was observed, or chipping was observed on a portion of the surface.
B: Chipping was observed on the entire surface, and a crack was observed on a portion of the surface.
C: Penetration

### <Flowability: MFR>

A measurement was performed on the thermoplastic elastomer compositions obtained in Examples and Comparative Examples under the conditions of a measurement temperature of 230°C and a measurement load of 21.2 N in accordance with JIS K 7210 (1999).

### <Flexibility: tensile elongation>

A measurement was performed on the injection-molded articles (350 mm × 100 mm × 1.5 mm) prepared from the pellets of the thermoplastic elastomer compositions obtained in Examples and Comparative Examples, at a test speed of 500 mm/minute by using a method according to the specification of JIS K 6251.

### [Examples 1 to 5 and Comparative Examples 1 to 6]

Raw materials were mixed together according to the formulations shown in Table-1. The resulting mixtures were each melt-kneaded in a twin-screw kneader (a cylinder temperature of 180°C to 200°C) to produce pellets of a thermoplastic elastomer composition.

A measurement of MFR was performed on the obtained thermoplastic elastomer compositions. The results are shown in Table-1.

The obtained thermoplastic elastomer compositions were each injection-loaded into a sheet-shaped mold having a size of 350 mm (length) × 100 mm (width) × 1.5 mm (thickness) at an injection speed of 40 mm/second by using an electric injection molding machine (manufactured by Sumitomo Heavy Industries, Ltd.), at a clamping force of 180 t, a cylinder temperature of 200°C, and a mold temperature of 40°C.

After the completion of loading, the injection-molded articles were cooled for 30 seconds, and thereafter, the injection-molded articles were removed. The obtained injection-molded articles were evaluated for flame retardancy, feel, scratch resistance, and tensile elongation. The results are shown in Table-1.

### [Table 1]

**<Table-1>**

| | | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|
| Formulation amounts (parts by mass) | Component (A) | A-1 | | 20 | 20 | 19 | 20 | 20 | 22 | 22 | 20 | 15 | 12 | 30 |
| | Component (B) | B-1 | | 40 | 37 | 49 | 20 | | 40 | | 37 | 30 | 24 | 36 |
| | | B-2 | | | | | | 40 | | 40 | | | | |
| | | B-3 | | | | | 20 | | | | | | | |
| | Component (C) | C-1 | | 36 | 34 | 28 | 36 | 36 | 38 | 38 | 34 | 25 | 24 | 30 |
| | Flame retardant | Component (D) | D-1 | 4 | 9 | 4 | 4 | 4 | | | | | | |
| | | X-1 (Mg(HO)₂) | | | | | | | | | 9 | 30 | 40 | |
| | | X-2 (containing phosphorus) | | | | | | | | | | | | 4 |
| | Other additives | E-1 | | 0.1 | 0.1 | 0.1 | 0.1 | 0.1 | 0.1 | 0.1 | 0.1 | 0.1 | 0.1 | 0.1 |
| | | F-1 | | 6 | 6 | 6 | 6 | 6 | 6 | 6 | 6 | | | 6 |
| Evaluation results | Flame retardancy (burning velocity: mm/min) | | | 36 | 37 | 35 | 29 | 34 | 57 | 62 | 50 | 30 | 23 | 46 |
| | Feel | | | A | B | A | A | A | A | A | B | C | C | A |
| | Scratch resistance (Taber scratch) | | | A | A | A | A | A | A | A | B | C | C | A |
| | MFR (g/10 minutes) | | | 55 | 52 | 37 | 52 | 49 | 53 | 38 | 43 | - | - | 45 |
| | Tensile elongation (%) | | | 682 | 689 | 743 | 762 | 847 | 729 | 660 | 759 | - | - | 658 |

### [Evaluation Results]

Table-1 provides the following indications.

In Examples 1 to 5, a propylene-based polymer that serves as the component (A), a hydrogenated block copolymer that serves as the component (B), a softening agent for a hydrocarbon-based rubber that serves as the component (C), and a halogen-containing flame retardant that serves as the component (D) were included, and as a result, the burning velocity was less than or equal to 40 mm/minute, an excellent feel was achieved, and no cracks were observed in the evaluation of scratch resistance, which indicated excellent scratch resistance. Furthermore, the values of MFR indicate that excellent moldability was achieved, and the values of the tensile elongation indicate that excellent flexibility was achieved.

In Comparative Example 1 and Comparative Example 2, no halogen-containing flame retardant was included, and, consequently, the burning velocity was high, which indicated poor flame retardancy.

In Comparative Examples 3 to 5, magnesium hydroxide was used as a flame retardant. Among these, in Comparative Example 3, in which the formulation amount of the magnesium hydroxide was relatively low, the burning velocity was higher than in Example 2, which indicated poor flame retardancy, and in addition, chipping and cracking occurred on the entire surface in the Taber scratch test. In Comparative Examples 4 and 5, in which the formulation amount of the magnesium hydroxide was high, the burning velocity was less than or equal to 40 mm/minute, but bleed was perceived by the hand in the evaluation of the feel, and the blade penetrated the specimen in the Taber scratch test.

In Comparative Example 6, in which a phosphorus-containing flame retardant was included instead of a halogen-containing flame retardant, the effect of imparting flame retardancy was inferior to that in the instance in which a halogen-containing flame retardant was used.

Although the present invention has been described in detail with reference to particular embodiments, it will be apparent to those skilled in the art that various changes may be made thereto without departing from the spirit and scope of the present invention.

The present application is based on Japanese Patent Application No. 2019-208921 filed on November 19, 2019, which is herein incorporated in its entirety by reference.

### Industrial Applicability

Molded articles produced from the thermoplastic elastomer composition of the present invention have excellent flame retardancy, feel, and scratch resistance and are, therefore, suitable for use in automotive parts, such as automotive interior parts, and in building components, medical components, wire cover materials, sundries, and the like.

## Claims

1. A thermoplastic elastomer composition comprising components (A) to (D), listed below, wherein a content ratio of the component (D) is 0.01 to 30 parts by mass per 100 parts by mass of a total of the components (A) to (D),
component (A): a propylene-based polymer;
component (B): a block copolymer and/or a hydrogenated product thereof, the block copolymer including at least two polymer blocks P and at least one polymer block Q, the at least two polymer blocks P primarily including aromatic vinyl compound units, the at least one polymer block Q primarily including conjugated diene compound units;
component (C): a softening agent for a hydrocarbon-based rubber; and
component (D): a halogen-containing flame retardant.

2. The thermoplastic elastomer composition according to Claim 1, further comprising silicone.

3. The thermoplastic elastomer composition according to Claim 1 or 2, wherein halogen atoms in the halogen-containing flame retardant that serves as the component (D) are of at least one type selected from the group consisting of fluorine atoms, chlorine atoms, and bromine atoms.

4. The thermoplastic elastomer composition according to any one of Claims 1 to 3, wherein the content ratio of the component (D) per 100 parts by mass of the total of the component (A), the component (B), the component (C), and the component (D) is 0.9 to 30 parts by mass.

5. The thermoplastic elastomer composition according to Claim 4, wherein the component (A) is present in an amount of 1 to 80 parts by mass, the component (B) is present in an amount of 5 to 80 parts by mass, the component (C) is present in an amount of 5 to 80 parts by mass, and the component (D) is present in an amount of 0.9 to 30 parts by mass, per 100 parts by mass of the total of the components (A) to (D).

6. The thermoplastic elastomer composition according to any one of Claims 1 to 5, wherein a content percentage of halogen atoms present in the halogen-containing flame retardant that serves as the component (D) is 70 to 95 mass%.

7. A molded article formed by molding the thermoplastic elastomer composition according to any one of Claims 1 to 6.

8. An injection-molded article formed by injection-molding the thermoplastic elastomer composition according to any one of Claims 1 to 6.

9. An automotive part in which the thermoplastic elastomer composition according to any one of Claims 1 to 6 is used.

10. An automotive part in which a thermoplastic elastomer composition comprising components (A) to (D), listed below, is used,
component (A): a propylene-based polymer;
component (B): a block copolymer and/or a hydrogenated product thereof, the block copolymer including at least two polymer blocks P and at least one polymer block Q, the at least two polymer blocks P primarily including aromatic vinyl compound units, the at least one polymer block Q primarily including conjugated diene compound units;
component (C): a softening agent for a hydrocarbon-based rubber; and
component (D): a halogen-containing flame retardant.
